# FASCICULE DE BREVET EUROPEEN

(11) **EP 1 736 398 B1**
(45) Date de publication et mention de la délivrance du brevet: **24.08.2011**
(21) Numéro de dépôt: 06290996.5
(22) Date de dépôt: 20.06.2006
(51) Int. Cl.: B62D 25/08, B60S 1/04, B62D 65/02, B62D 65/04

(54) **Module de pare-brise de vehicule**
Windschutzscheibeneinheit eines Fahrzeuges
Windshield unit for a vehicle

(30) Priorité: 20.06.2005 FR 0506225
(43) Date de publication de la demande: 27.12.2006
(73) Titulaire: COMPAGNIE PLASTIC OMNIUM, 69007 Lyon (FR)
(72) Inventeur: Delavalle, Dominique, 01160 Pont D'Ain (FR)
(74) Mandataire: Remy, Vincent Noel Paul

(56) Documents cités:
- EP-A2- 1 149 757
- DE-A1- 4 405 926
- DE-A1- 10 013 256
- DE-A1- 10 121 688
- DE-A1- 19 802 702
- DE-A1- 19 813 094
- FR-A1- 2 445 776
- FR-A1- 2 788 250
- GB-A- 2 065 039
- JP-A- 2003 182 633
- US-A- 4 730 870
- US-B1- 6 183 034

## Description

### Etat de la technique

On sait que lors de la fabrication d'un véhicule automobile, un certain nombre d'éléments fonctionnels doivent être assemblés sur la caisse de véhicule en fin de chaîne de fabrication.

On assemble notamment un pare-brise, un auvent situé à la base du pare-brise destiné à évacuer les eaux de pluie, un mécanisme d'essuie-glace, un moteur de circuit de ventilation d'air de l'habitacle, un évaporateur de circuit de climatisation d'air de l'habitacle, un filtre à pollen ...

Un example de cette technique antérieure est divulgué par le document FR 2 445 776.

### Problème posé par cet état de la technique

Ces nombreux éléments fonctionnels contribuent à augmenter le temps d'assemblage du véhicule sur la chaîne de fabrication.

De plus, certains éléments fonctionnels, comme par exemple les mécanismes d'essuie-glace, sont particulièrement difficiles à monter. En effet, les mécanismes d'essuie-glace sont montés sur l'auvent après que ce dernier a été assemblé sur la caisse du véhicule automobile. Or, l'emplacement réservé à la fixation des mécanismes d'essuie-glace est situé sous le pare-brise ce qui réduit son accessibilité lors du positionnement et du vissage des mécanismes.

L'invention propose donc une solution qui permet une fixation rapide et facile de tous ces éléments sur la caisse d'un véhicule présent sur une chaîne de fabrication.

Par ailleurs, on sait que les montants des pare-brises de l'état de la technique, qui font partie de la caisse, sont des zones très rigides et donc particulièrement dangereuses pour un piéton en cas de choc.

L'invention vise également à résoudre les problèmes de chocs entre la tête d'un piéton et les montants de pare-brise.

### Solution technique proposée par l'invention

A cet effet, l'invention a pour objet un module de pare-brise de véhicule, destiné à être rapporté sur la caisse en blanc du véhicule, caractérisé en ce qu'il comprend :
- un auvent rigide situé à la base du pare-brise lorsqu'il est monté sur le module, l'auvent étant conformé pour recevoir au moins un élément fonctionnel du véhicule, et
- des moyens de solidarisation avec le pare-brise comprenant deux montants latéraux reliés à l'auvent et aptes à recevoir deux bords latéraux du pare-brise, et dans lequel les montants latéraux sont conformés pour absorber des chocs avec un piéton, notamment avec sa tête.

### Avantages apportés par l'invention

Grâce à l'invention, le pare-brise, l'auvent et différents éléments fonctionnels du véhicule peuvent être assemblés sous la forme d'un module unique en dehors de la chaîne de production et rapportés sur la caisse en blanc du véhicule sur la chaîne de production en une seule opération. Cela offre un gain de temps considérable par rapport à l'état de la technique.

Grâce à l'invention, on conforme les montants du véhicule pour qu'ils puissent facilement amortir les chocs avec la tête d'un piéton.

### Caractéristiques optionnelles

Un module de pare-brise selon l'invention peut en outre comporter l'une ou plusieurs caractéristiques suivantes.
- Les moyens de solidarisation comprennent une plage de collage ménagée sur l'auvent apte à recevoir la base du pare-brise.
- Les moyens de solidarisation comprennent un cadre structurel formé par l'auvent, les deux montants latéraux et une traverse supérieure apte à recevoir un bord supérieur du pare-brise. Généralement, un pare-brise présente des défauts géométriques qui rendent approximatif son positionnement sur la caisse du véhicule. Il faut dont souvent rattraper ces jeux au moyen de joints inesthétiques. Grâce au cadre structurel, on élimine ces défauts en fabriquant le cadre sur un gabarit qui garantit ses dimensions.
- Une cavité longitudinale est ménagée dans chaque montant latéral, la cavité étant dimensionnée pour accueillir un essuie-glace en position sensiblement verticale. Cette caractéristique est particulièrement avantageuse lorsqu'on utilise un essuie-glace qui est en position sensiblement verticale au repos. Ainsi, lorsque l'essuie-glace est au repos, il est caché à l'intérieur d'un des montants du pare-brise ce qui présente un grand avantage esthétique.
- L'auvent supporte l'un ou moins des éléments fonctionnels de la liste constituée par un mécanisme d'essuie-glace, un bras et un balai d'essuie-glace, un moteur de circuit de ventilation d'air de l'habitacle, un évaporateur de circuit de climatisation d'air de l'habitacle, un filtre à pollen, un réservoir de liquide de frein, un gicleur de lave-glace et un réservoir de liquide pour lave-glace.
- L'auvent comprend des moyens de fixation à des coupelles d'amortisseur portées par la caisse du véhicule.
- Le cadre structurel est réalisé en matière thermoplastique. Il est cependant possible de le fabriquer en d'autres matériaux rigides tels que de la tôle ou un matériau composite.
- Le module comprend un pare-brise fixé sur les moyens de solidarisation. Il est notamment possible de fixer le pare-brise à l'arrière du cadre structurel de sorte que, une fois monté sur la caisse du véhicule, le cadre structurel rend invisible les moyens de fixation du pare-brise au module. Cela permet d'éviter la pratique courante de l'état de la technique qui consiste à rapporter des enjoliveurs par dessus les montants du pare-brise pour masquer les moyens de fixation du pare-brise à la caisse.
- Chaque montant latéral comprend une première face formant portée d'appui sur la caisse en blanc du véhicule automobile et une seconde face opposée à la première face comportant une plage de fixation du pare-brise, de sorte qu'une fois le module de pare-brise monté sur la caisse en blanc, le montant latéral est intercalé entre la caisse et le pare-brise. Ainsi, chaque montant latéral remplit un rôle d'absorbeur de choc. Les inventeurs ont constaté que l'absorption des chocs était particulièrement efficace lorsque l'absorbeur était intercalé entre la caisse et le pare-brise car ii permet d'éloigner le pare-brise des points durs constitués par la caisse en blanc du véhicule. En outre, pour des raison esthétiques, il est préférable que l'absorbeur soit disposé sous le pare-brise puisque cela évite que l'absorbeur soit en saillie du véhicule.
- Chaque montant latéral comprend au moins un corps creux formant absorbeur de choc, apte à s'écraser sous l'effet d'un choc.

L'invention sera mieux comprise à la lecture de la description qui va suivre donnée uniquement à titre d'exemple, faite en se référant aux dessins annexés.

### Brève description des dessins

- La figure 1 est un schéma en perspective d'un module de pare-brise de véhicule selon l'invention ;
- la figure 2 est une coupe longitudinale verticale selon II-II d'un montant du module de pare-brise représenté sur la figure 1 ;
- la figure 3 est un schéma en perspective d'un module de pare-brise selon un autre mode de réalisation de l'invention ; et
- la figure 4 est une coupe horizontale selon IV-IV d'un montant du module de pare-brise représenté sur la figure 3.

### Description d'un exemple

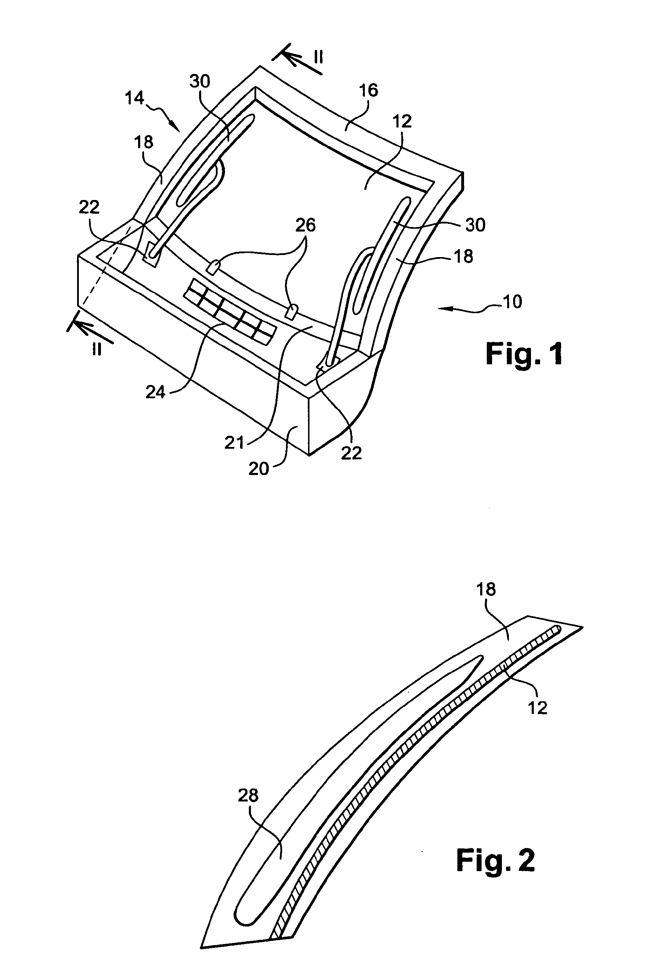

On a représenté sur la figure 1 un module 10 de pare-brise 12 de véhicule automobile selon l'invention.

Le module 10 de pare-brise comprend un cadre structurel 14 en matière thermoplastique apte à supporter le pare-brise 12. A cet effet, le cadre 14 est formé par une traverse supérieure horizontale 16, deux montants latéraux 18 sensiblement verticaux et un auvent rigide 20 situé à la base de pare-brise 12. L'auvent 20, parfois appelé cassette d'auvent ou boîte à eau, est situé à l'extrémité inférieure du pare-brise et à l'extrémité arrière d'un capot du véhicule automobile.

Le cadre structurel constitue des moyens de solidarisation du pare-brise 12 au module. Cette solidarisation est obtenue par collage. En particulier, l'auvent 20 comprend une plage de collage 21 apte à recevoir la base du pare-brise 12.

L'auvent 20 est conformé pour recevoir différents éléments fonctionnels du véhicule. On a notamment représenté sur la figure 1 des mécanismes d'essuie-glace 22, des lave-glaces 26 et un filtre à pollen 24. D'autres éléments fonctionnels, non représentés, peuvent également être supportés par l'auvent 20, notamment un moteur de circuit de ventilation d'air de l'habitacle, un évaporateur de circuit de climatisation d'air de l'habitacle, un réservoir de liquide de frein, un réservoir de liquide pour les lave-glaces 26, une boîte de fusibles ou un boîtier électronique.

On a représenté sur la figure 2 le montant latéral 18 de gauche de la figure 1 selon une coupe longitudinale verticale. Le montant latéral 18 comprend une cavité longitudinale 28 dimensionnée pour accueillir un essuie-glace 30 en position sensiblement verticale. Cette cavité longitudinale 28 présente deux avantages. D'une part, elle permet de cacher l'essuie-glace lorsqu'il est au repos dans une position sensiblement verticale. D'autre part, elle rend le montant latéral 18 apte à s'écraser en cas de choc avec un piéton, notamment avec sa tête. L'écrasement du montant latéral 18 permet d'amortir un tel choc.

Le module 10 qui vient d'être décrit est assemblé en dehors de la chaîne de fabrication des véhicules automobiles. Il est ensuite monté sur la caisse en blanc du véhicule automobile en une seule étape de montage ce qui procure un gain de temps considérable.

Lors de l'assemblage sur la caisse en blanc du véhicule automobile, le module 10 est fixé au véhicule notamment par des moyens de fixation de l'auvent 20 à des coupelles d'amortisseurs de la caisse de véhicule.

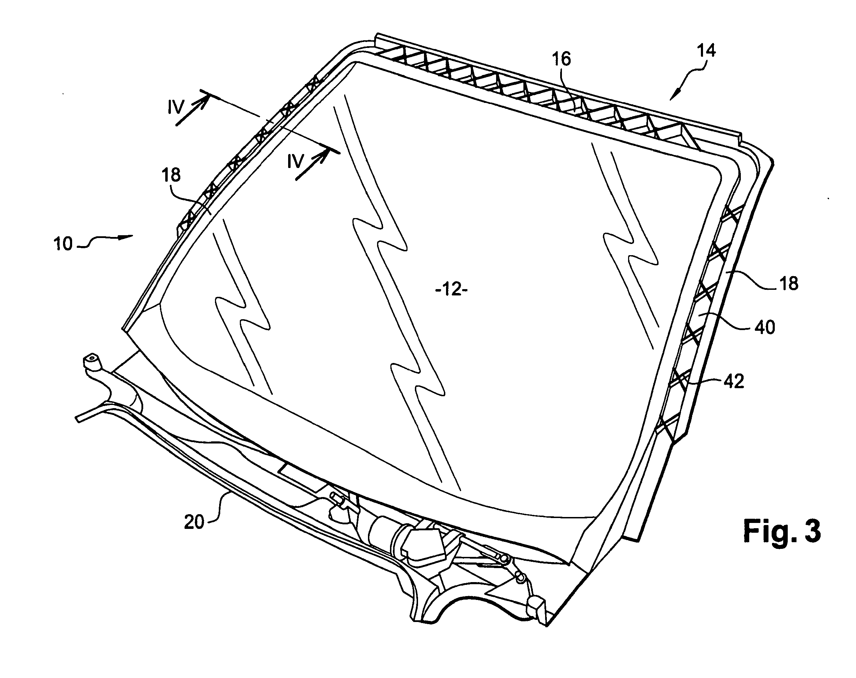

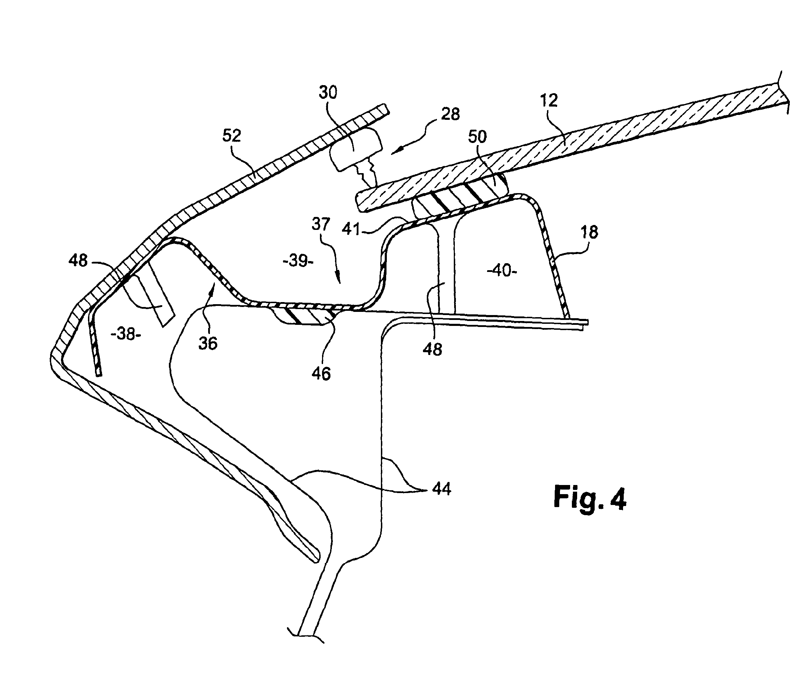

On a représenté sur les figures 3 et 4 un module selon un autre mode de réalisation de l'invention. Dans ce mode de réalisation, les montants latéraux 18 du cadre structurel 14 sont intercalés entre la caisse du véhicule automobile et le pare-brise 12.

Ce module 10 comprend un cadre structurel 14 comprenant deux montants latéraux 18 aptes à recevoir deux bords latéraux du pare-brise 12, une traverse supérieure 16 apte à recevoir un bord supérieur du pare-brise. Les montants latéraux 18 sont conformés pour absorber des chocs avec un piéton, notamment avec sa tête. La traverse supérieure 16 est également conformée pour absorber des chocs avec un piéton.

Comme dans le premier mode de réalisation, le module 10 comprend en outre un auvent 20 rigide situé à la base du pare-brise 12 lorsqu'il est monté sur le module 10, l'auvent étant conformé pour recevoir au moins un élément fonctionnel du véhicule.

La figure 4 est un schéma selon une coupe horizontale du montant 18 gauche du module de la figure 3.

Le montant 18 comprend une première face 36 orientée vers le véhicule automobile et une seconde face 37 opposée à la première face 36 et orientée vers l'extérieur du véhicule automobile.

Sur la figure 4, on distingue que le montant 18 est ondulé et comprend trois corps creux formés par des gorges longitudinales en U 38, 39 et 40 juxtaposées les unes à coté des autres.

La gorge centrale 39 a une orientation opposée à celle des deux autres gorges 38 et 40 et débouche vers l'extérieur du véhicule tandis que les deux gorges latérales 38 et 40 débouchent vers l'intérieur du véhicule.

Comme représenté sur la figure 3, la gorge centrale 39 est maintenue en forme au moyen de nervures croisées 42 régulièrement réparties le long de la gorge.

Comme représenté sur la figure 4, les gorges latérales 38 et 40 comprennent chacune une nervure longitudinale 48 destinées à prendre à appui sur un montant 44 de la caisse en blanc du véhicule en cas de choc.

Les nervures 48 ainsi que le fond de la gorge 39 sont ménagés sur la première face 36 du montant 18 et forment portée d'appui du montant 18 sur la caisse en blanc du véhicule automobile.

Le montant 18 est fixé sur le montant 44 de la caisse par exemple au moyen d'un cordon de mastic 46.

Le montant 18 comprend en outre, sur sa seconde face 37, une plage de fixation 41 du pare-brise 12. Le pare-brise 12 est fixé sur cette plage de fixation 41 du montant 18 par l'intermédiaire d'un cordon 50 de colle.

Un enjoliveur 52 de montant est rapporté par dessus le montant 18 de manière à recouvrir partiellement la gorge 39. Cet enjoliveur 52 permet de ménager une cavité longitudinale 28 apte à accueillir l'essuie glace 30 en position sensiblement verticale au repos.

La structure particulière du montant 18 permet d'absorber les chocs avec un piéton. En effet, la figure 4 montre clairement que les montants 18 du module 10 permettent d'éloigner les zones de contact avec la tête d'un piéton des montants 44 de la caisse en blanc qui constituent des zones dures.

L'absorption d'énergie est obtenue grâce à l'effet cumulé des trois corps creux constitués par les trois gorges 38, 39, 40. Grâces aux nervures 42 et 48 présentes dans les gorges 38, 39, 40 des montants 18, les corps creux ont une grande capacité d'absorption. En effet, les nervures, en prenant appui en cas de choc sur les montants de caisse 44 ou sur l'enjoliveur 52, évitent que les montants 18 ne s'effacent trop vite sous l'effet du choc.

## Revendications

1. Module (10) de pare-brise (12) de véhicule, destiné à être rapporté sur la caisse en blanc du véhicule, **caractérisé en ce qu'**il comprend :
- un auvent (20) rigide situé à la base du pare-brise (12) lorsqu'il est monté sur le module (10), l'auvent étant conformé pour recevoir au moins un élément fonctionnel (22, 24, 26) du véhicule, et
- des moyens de solidarisation avec le pare-brise comprenant deux montants latéraux (18) reliés à l'auvent (20) et aptes à recevoir deux bords latéraux du pare-brise (12),
dans lequel les montants latéraux (18) sont conformés pour absorber des chocs avec un piéton, notamment avec sa tête, et dans lequel l'auvent (20) supporte l'un au moins des éléments fonctionnels de la liste constituée par un moteur (22) d'essuie-glace, un bras et un balai d'essuie-glace, un moteur de circuit de ventilation d'air de l'habitacle, un évaporateur de circuit de climatisation d'air de l'habitacle, un filtre (24) à pollen, un réservoir de liquide de frein, un gicleur (26) de lave-glace et un réservoir de liquide pour lave-glace (26); charactérisé **en ce que**
le pare-brise (12), l'auvent (20) et le ou les élément(s) fonctionnel(s) (22, 24, 26) du véhicule sont assemblés sous la forme d'un module unique en dehors de la chaîne de production et rapportés sur la caisse en blanc du véhicule sur la chaîne de production en une seule opération.

2. Module (10) selon la revendication 1, dans lequel les moyens de solidarisation comprennent en outre une plage de collage (21) ménagée sur l'auvent apte à recevoir la base du pare-brise.

3. Module selon la revendication 1 ou 2, dans lequel les moyens de solidarisation comprennent un cadre structurel (14) formé par l'auvent, les deux montants latéraux (18) et une traverse supérieure (16) apte à recevoir un bord supérieur du pare-brise.

4. Module (16) selon l'une quelconque des revendications précédentes, dans lequel une cavité longitudinale (28) est ménagée dans chaque montant latéral (18), la cavité (28) étant dimensionnée pour accueillir un essuie-glace (30) en position sensiblement verticale.

5. Module selon l'une quelconque des revendications précédentes, dans lequel l'auvent (20) comprend des moyens de fixation à des coupelles d'amortisseur portées par la caisse du véhicule.

6. Module (10) selon la revendication 3, dans lequel le cadre (14) structurel est réalisé en matière thermoplastique.

7. Module (10) selon l'une quelconque des revendications précédentes, comprenant un pare-brise (12) fixé sur les moyens de solidarisation (14).

8. Module (10) selon l'une quelconque des revendications précédentes, dans lequel chaque montant latéral (18) comprend une première face (36) formant portée d'appui sur la caisse en blanc du véhicule automobile et une seconde face (37) opposée à la première face comportant une plage de fixation (41) du pare-brise, de sorte qu'une fois le module (10) de pare-brise monté sur la caisse en blanc, le montant latéral (18) est intercalé entre la caisse et le pare-brise (12).

9. Module (10) selon la revendication précédente, dans lequel chaque montant latéral (18) comprend au moins un corps creux (38, 39, 40) formant absorbeur de choc, apte à s'écraser sous l'effet d'un choc.

## Claims

1. Vehicle windshield module (10) for fitting on the body-in-white of the vehicle, the module being **characterized in that** it comprises:
• a rigid scuttle (20) situated at the base of the windshield (12) when mounted on the module (10), the scuttle being shaped to receive at least one functional element (22, 24, 26) of the vehicle; and
• means for fastening to the windshield, comprising two lateral uprights (18) connected to the scuttle (20) and suitable for receiving two lateral edges of the windshield (12),
wherein the lateral uprights (18) are shaped to absorb impacts with a pedestrian, in particular with the pedestrian's head, and wherein the scuttle (20) includes at least one of the functional elements from the list constituted by: a windshield wiper motor (22); a windshield wiper arm and blade; a motor for a circuit for ventilating the cabin with air; an evaporator of a circuit for air conditioning the cabin; a pollen filter (24); a tank of brake fluid; a windshield washer nozzle (26); and a tank for windshield washer liquid (26);
the module being **characterized in that** the windshield (12), the scuttle (20), and the functional element(s) (22, 24, 26) of the vehicle are assembled in the form of a single module away from the production line, and they are fitted to the body-in-white of the vehicle on the production line in a single operation.

2. Module (10) according to claim 1, wherein the fastener means further comprise an adhesive-bonding area (21) formed on the scuttle and suitable for receiving the base of the windshield.

3. Module according to claim 1 or claim 2, wherein the fastener means comprise a structural frame (14) formed by the scuttle, the two lateral uprights (18), and a top cross-member (16) suitable for receiving a top edge of the windshield.

4. Module (10) according to any preceding claim, wherein a longitudinal cavity (28) is formed in each lateral upright (18), the cavity (28) being dimensioned to receive a windshield wiper (30) in a substantially vertical position.

5. Module according to any preceding claim, wherein the scuttle (20) includes fastener means for fastening to damper cups carried by the body of the vehicle.

6. Module (10) according to claim 3, wherein the structural frame (14) is made of thermoplastic material.

7. Module (10) according to any preceding claim, including a windshield (12) fastened to the fastener means (14).

8. Module (10) according to any preceding claim, wherein each lateral upright (18) includes a first face (36) forming a bearing surface against the body-in-white of the motor vehicle, and a second face (37) opposite to the first face including a fastener area (41) for the windshield, such that once the windshield module (10) is mounted on the body-in-white, the lateral upright (18) is interposed between the body and the windshield (12).

9. Module (10) according to the preceding claim, wherein each lateral upright (18) includes at least one hollow body (38, 39, 40) forming an impact absorber, suitable for flattening under the effect of an impact.

## Patentansprüche

1. Modul (10) für Fahrzeugwindschutzscheibe (12), das dazu bestimmt ist, an die unlackierte Karosserie des Fahrzeugs angebaut zu werden, **dadurch gekennzeichnet, dass** es Folgendes aufweist:
- einen starren Luftschlitzteil (20), der sich an der Basis der Windschutzscheibe (12) befindet, wenn er an dem Modul (10) montiert ist, wobei der Luftschlitzteil ausgebildet ist, um mindestens ein Funktionselement (22, 24, 26) des Fahrzeugs aufzunehmen, und
- Mittel zum festen Verbinden mit der Windschutzscheibe, die zwei seitliche Stützen (18) aufweisen, die mit dem Luftschlitzteil (20) verbunden sind und zwei seitliche Ränder der Windschutzscheibe (12) aufnehmen können,
wobei die seitlichen Stützen (18) ausgebildet sind, um Aufpralle mit einem Fußgänger zu absorbieren, insbesondere mit seinem Kopf, und wobei der Luftschlitzteil (20) mindestens eines der Funktionselemente der Liste hält, die aus einem Scheibenwischermotor (22), einem Scheibenwischerarm und einem Scheibenwischerblatt, einem Motor des Luftbelüftungskreislaufs der Fahrgastzelle, einem Verdampfer des Luftklimatisierungskreislaufs der Fahrgastzelle, einem Pollenfilter (24), einem Bremsflüssigkeitsbehälter, einer Scheibenwischerdüse (26) und einem Flüssigkeitsbehälter für Scheibenwischerflüssigkeit (26), besteht, **dadurch gekennzeichnet, dass**
die Windschutzscheibe (12), der Luftschlitzteil (20) und das oder die Funktionselemente (22, 24, 26) des Fahrzeugs in der Form einer einzigen Einheit außerhalb der Produktionslinie zusammengebaut und an die unlackierte Karosserie des Fahrzeugs in der Produktionslinie in einem einzigen Vorgang angebaut werden.

2. Modul (10) nach Anspruch 1, bei dem die Mittel zum festen Verbinden ferner einen Klebebereich (21) aufweisen, der an dem Luftschlitzteil eingerichtet ist und die Basis der Windschutzscheibe aufnehmen kann.

3. Modul nach Anspruch 1 oder 2, bei dem die Mittel zum festen Verbinden einen Strukturrahmen (14) aufweisen, der von dem Luftschlitzteil, den zwei seitlichen Stützen (18) und einem oberen Querbalken (16) gebildet ist und einen oberen Rand der Windschutzscheibe aufnehmen kann.

4. Modul (10) nach einem der vorhergehenden Ansprüche, bei dem ein Längshohlraum (28) in jeder seitlichen Stütze (18) eingerichtet ist, wobei der Hohlraum (28) bemessen ist, um einen Scheibenwischer (30) in einer im Wesentlichen vertikalen Position aufzunehmen.

5. Modul nach einem der vorhergehenden Ansprüche, bei dem der Luftschlitzteil (20) Mittel zum Befestigen an Dämpferschalen, die von der Karosserie des Fahrzeugs getragen werden, aufweist.

6. Modul (10) nach Anspruch 3, bei dem der Strukturrahmen (14) aus Thermoplastwerkstoff hergestellt ist.

7. Modul (10) nach einem der vorhergehenden Ansprüche, das eine Windschutzscheibe (12) aufweist, die an den Befestigungsmitteln (14) befestigt ist.

8. Modul (10) nach einem der vorhergehenden Ansprüche, bei dem jede seitliche Stütze (18) eine erste Seite (36) aufweist, die einen Auflagebereich an der unlackierten Karosserie des Kraftfahrzeugs bildet, und eine zweite Seite (37), die der ersten Seite entgegengesetzt ist und einen Befestigungsbereich (41) der Windschutzscheibe derart aufweist, dass die seitliche Stütze (18) zwischen der Karosserie und der Windschutzscheibe (12) eingefügt ist, sobald das Windschutzscheibenmodul (10) an die unlackierte Karosserie montiert ist.

9. Modul (10) nach dem vorhergehenden Anspruch, bei dem jede seitliche Stütze (18) mindestens einen Hohlkörper (38, 39, 40) aufweist, der einen Stoßdämpfer bildet, der sich unter der Einwirkung eines Aufpralls zusammendrücken kann.
